# EUROPEAN PATENT APPLICATION

(11) **EP 4 582 708 A1**
(43) Date of publication of application: **09.07.2025**
(21) Application number: 23859225.7
(22) Date of filing: 24.08.2023
(51) Int. Cl.: F16C 17/03

(54) **CYLINDRICAL TILTABLE SLIDING BEARING**

(30) Priority: 30.08.2022 CN 202211052361
(71) Applicant: Dongfang Electric Machinery Co., Ltd. of Dongfang Electric Group, Deyang, Sichuan 618000 (CN)
(72) Inventor: LIN, Kun, Deyang, Sichuan 618000 (CN); SUN, Libin, Deyang, Sichuan 618000 (CN); LI, Shaobin, Deyang, Sichuan 618000 (CN); LAN, Yong, Deyang, Sichuan 618000 (CN); WU, Jun, Deyang, Sichuan 618000 (CN); JIANG, Feng, Deyang, Sichuan 618000 (CN); XIAO, Boyang, Deyang, Sichuan 618000 (CN); WEI, Yanqiang, Deyang, Sichuan 618000 (CN); GAO, Jiaju, Deyang, Sichuan 618000 (CN); WU, Guangyan, Deyang, Sichuan 618000 (CN)
(74) Representative: Patrade A/S
(86) International application number: PCT/CN2023/114551
(87) International publication number: WO 2024/046192

(57) **Abstract**

The present invention relates to the technical field of a drive bearing, and it discloses a cylindrical tilting journal bearing, comprising a bearing housing, a bearing static ring, and a bearing dynamic ring, wherein the bearing static ring is mounted inside the bearing housing, the bearing dynamic ring is mounted inside the bearing static ring, and an elastic support mechanism is provided between the bearing static ring and bearing housing; the bearing static ring is capable of being tilted within the bearing housing along the radial direction of the bearing; the elastic support mechanism comprises an adjusting screw and an elastic member, wherein the elastic member is provided on the bearing static ring; the bearing housing is provided with a threaded hole, wherein a threaded portion of the adjusting screw is mated with the threaded hole and a head of the adjusting screw abuts against a surface of the elastic member. In the present invention, the bearing can be tilted based on retaining cylindrical structure of the bearing through a special support structure. The tilting structure can adapt to the bending and oscillation of the rotor when the motor set deviates from the rated working conditions. Therefore, the load of bearing is more evenly distributed and the overall structure of the bearing is more compact, which is especially suitable for the equipment having a narrow space.

## Description

### FIELD OF TECHNOLOGY

The present invention relates to the technical field of a drive bearing, particularly, it relates to a cylindrical tilting journal bearing.

### BACKGROUND

A shielded motor is a kind of motor used for conveying highly toxic, corrosive, radioactive, flammable and explosive, precious liquid, as well as the liquid which may cause to significant harm after leakage. The shielded motor is directly connected with a pump impeller through a motor shaft to form a shielded pump. The shielded pump is a type of sealless pump and is sealed with a drive motor in a pressure vessel filled with pumping medium. The pressure vessel only has a static seal and eliminate a rotating seal equipment of the centrifugal pump, thereby achieving a complete sealing without leakage.

A bearing is the key component of the shielded motor, providing support for the rotation of the motor rotor. The shielded motor is compact, especially small chemical shielded pump generally uses a cylindrical journal bearing due to space limitations, and uses a pump to transport the medium for lubrication and cooling. Although the structure of the cylindrical journal bearing is simple, it is poorly adapted to different working conditions. When the motor set deviates from the rated working conditions, the bearing cannot adapt to bending and oscillation potentially occurred by the rotor. This results in increased vibration of the motor set and significantly increased vibration noise, and even more serious accident that the bearing of motor is damaged and cannot rotate.

The Chinese Utility Model patent (publication no. CN207470604U) discloses a journal bearing, which pushes tilting pads to shift towards the journal through an oil pressure controller, so that the gap between the tilting pads and the journal is in a proper range. This enables that the tilting pads can also establish a stable and reliable oil-film force, effectively avoiding vibration and improving the working stability for the pads.

Although the above prior art also involves a journal bearing structure and achieves the effect that the pads can be tilted along the radial direction of the bearing, the above journal bearing structure is complicated and takes up a larger space.

### SUMMARY

In order to overcome the above-mentioned technical defects, the present invention provides a cylindrical tilting journal bearing for the shielded motor, and the bearing can be tilted based on retaining the cylindrical structure of the bearing through a special support structure, and the tilting structure can adapt to the bending and oscillation of the rotor when the motor set deviates from the rated working conditions. Therefore, the bearing load is more evenly distributed and the bearing damage caused by the concentration of local load is avoided, and the overall structure of the bearing is simpler and more compact, which is especially suitable for the equipment in a narrow space.

In order to achieve the above purpose of the present invention, the technical solution is as follows.
a cylindrical tilting bearing, comprising a bearing housing, a bearing static ring, and a bearing dynamic ring, wherein the bearing static ring is mounted inside the bearing housing, the bearing dynamic ring is mounted inside the bearing static ring, and an elastic support mechanism is provided between the bearing static ring and bearing housing; the bearing static ring is capable of being tilted within the bearing housing along the radial direction of the bearing; the elastic support mechanism comprises an adjusting screw and an elastic member, wherein the elastic member is provided on the bearing static ring; the bearing housing is provided with a threaded hole, wherein a threaded portion of the adjusting screw is mated with the threaded hole and a head of the adjusting screw abuts against a surface of the elastic member.

Further, the elastic member is provided with an inner bore, and the head of the adjusting screw is inserted into the inner bore.

Further, a static-ring protective sleeve is configured around the surface of the bearing static ring, and the elastic support mechanism is provided between the static-ring protective sleeve and the bearing housing.

Further, a groove is provided on the static-ring protective sleeve, where the elastic member is configured inside the groove.

Further, the elastic support mechanisms are symmetrically provided along the circumferential direction of the bearing.

Further, the elastic member is a disc spring or a spring washer.

Further, the static-ring protective sleeve is connected with the bearing static ring to form an integrality by means of shrink fit.

Further, the static-ring protective sleeve is in clearance fit with the bearing housing.

Further, the bearing static ring is an integral-ring structure.

The present invention provides advantages as follows:
(1)In the present invention, the bearing can be tilted based on retaining cylindrical structure of the bearing through a special support structure. The tilting structure can adapt to the bending and oscillation of the rotor when the motor set deviates from the rated working conditions. Therefore, the load of bearing is more evenly distributed and the bearing damage caused by the concentration of local load is avoided.
(2) In the present invention, the bearing static ring can be tilted in the radial direction, so that the overall structure of the cylindrical tilting journal bearing is more compact, and the bearing static ring is an integral-ring, making the overall structure of the journal bearing easy to process, which is especially suitable for the equipment having a narrow space.

### BRIEF DESCRIPTION OF DRAWINGS

The forgoing and the specific embodiments below in the present invention become clearer when explained in connection with the accompanying drawings, wherein:
Figure 1 depicts a structural diagram of the cylindrical tilting journal bearing of the present invention;
Figure 2 depicts a cross-section along C-C of the Figure 1;
Figure 3 depicts an enlarged view of section I of the Figure 2;

Reference numbers:
1-bearing housing, 2-bearing static ring, 3-bearing dynamic ring, 4-elastic support mechanism, 5-inner bore, 6-static-ring protective sleeve, 7-groove, 8-main shaft, 41-adjusting screw, 42-elastic member.

### DETAILED DESCRIPTION OF THE INVENTION

To better understand the technical solutions in the invention, for one skilled in the art, the technical solutions that can achieve the purpose of the invention are further explained by several specific embodiments. It should be noted that the technical solutions protected by the invention include, but are not limited to the following embodiments. Based on the embodiments of the present invention, all other embodiments obtained by one skilled in the art without creative works shall fall within the scope of the present invention.

### Embodiment 1

A bearing is the key component of the shielded motor, providing support for the rotation of the motor rotor. The shielded motor is compact, especially small chemical shielded pump generally use a cylindrical journal bearing due to space limitations, and uses a pump to transport the medium for lubrication and cooling. Although the structure of the cylindrical journal bearing is simple, it is poorly adapted to different working conditions. When the motor set deviates from the rated working conditions, the bearing cannot adapt to bending and oscillation potentially occurred by the rotor. This results in increased vibration of the motor set and significantly increased vibration noise, and even more serious accident that the bearing of the motor is damaged and cannot rotate.

Based on this, the embodiment provides a cylindrical tilting journal bearing for the shielded motor, and the bearing can be tilted based on retaining the cylindrical structure of the bearing through a special support structure, and the tilting structure can adapt to the bending and oscillation of the rotor when the motor set deviates from the rated working conditions. Therefore, the bearing load is more evenly distributed and the bearing damage caused by the concentration of local load is avoided.

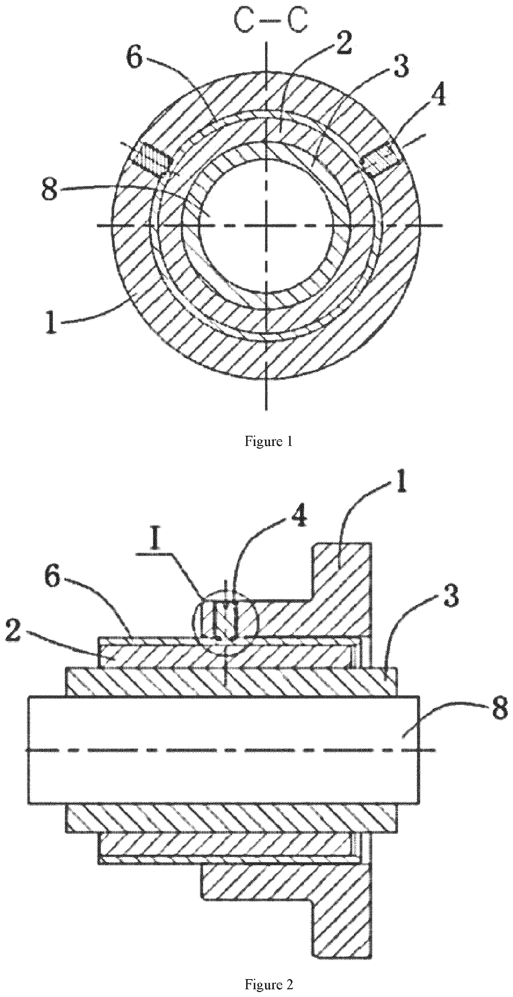

The present embodiment discloses a cylindrical tilting journal bearing. With reference to Figures 1 and 2, the bearing structure mainly comprises a bearing housing 1, a bearing static ring 2, and a bearing dynamic ring 3. The bearing static ring 2 is mounted inside the bearing housing 1 and the bearing static ring 2 is a whole-ring structure. The bearing dynamic ring 3 is mounted inside the bearing static ring 2, and a main shaft 8 is provided in an inner hole of the bearing dynamic ring 3. By an external driving force, the bearing dynamic ring 3 rotates inside the bearing housing with the main shaft 8. Further, the bearing static ring 2 is provided with an elastic support mechanism 4 between the bearing static ring 2 and the bearing housing 1, which is capable of producing deformation and compression along the radial direction of the bearing. The bearing static ring 2 is capable of being tilted inside the bearing housing 1 along the radial direction of the bearing under the action of the elastic support mechanism 4.

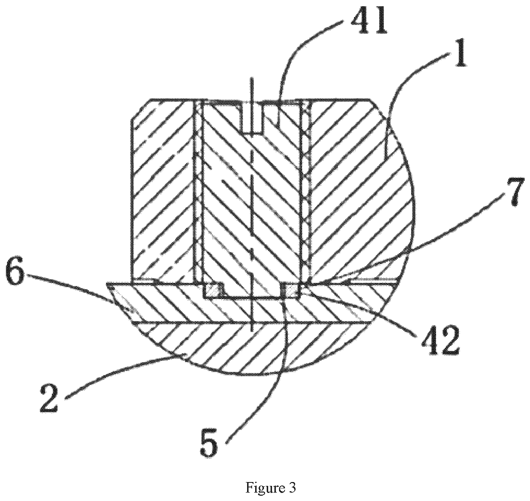

With reference to Figure 3, the elastic support mechanism 4 mainly comprises an adjusting screw 41 and an elastic member 42, wherein the elastic member 42 is provided on the bearing static ring 2. The bearing housing 1 is provided with a threaded hole along the radial direction, wherein a threaded portion of the adjusting screw 41 is screwed into the threaded hole and a head of the adjusting screw 41 passes through the threaded hole to abut against the surface of the elastic member 42, exerting pressure on the elastic member 42. The whole bearing structure described above achieves the constraints of the bearing static ring 2 in the radial, axial and circumferential directions.

In the present embodiment, the bearing housing 1 and the bearing static ring 2 together constitute a static support part of the bearing. The bearing dynamic ring 3 and the main shaft 8 constitute a rotating part of the bearing. The main shaft 8 rotates by an external driving force, and the bearing static ring 3 rotates with the main shaft 8. The bearing static ring 2 and the bearing housing 1, together acting as a static support part, support the main shaft 8 and the bearing dynamic ring 3. When the motor set deviates from the rated working conditions, the rotating part consisting of the main shaft 8 and the bearing dynamic ring 3 is bent and swung along the radial direction of the journal bearing. When the rotating part swings or bends along the radial direction, the radial constraints imposed by the elastic member 42 on the bearing static ring 2 are non-rigid due to the fact that the elastic member 42 can be deformed in the radial direction of the bearing. This enables the bearing static ring 2 in the bearing housing 1 to tilt with a movement of the main shaft 8 and the bearing dynamic ring 3 along the radial direction of the bearing, which ultimately makes the load of the bearing more evenly distributed and avoids damage to the bearing caused by the concentration of local load.

In the present embodiment, the adjusting screw 41 is threadedly connected to the bearing housing 1. When the length of the adjusting screw 41 into the bearing housing 1 is adjusted, the degree of compression of the adjusting screw on the elastic member 42 can be changed, so as to adjust the degree of tilting of the bearing static ring 2 along the radial direction.

### Embodiment 2

The present embodiment discloses a cylindrical tilting journal bearing, and on the basis of the above-described embodiment 1, the present embodiment further defines the structure of the bearing, and the details are shown as follows.

With reference to Figures 1 and 2, since the bearing static ring 2 is generally made of ceramics, the present embodiment is provided with a static-ring protective sleeve 6 around the outer surface of the bearing static ring 2, and the elastic support mechanism 4 is provided between the static-ring protective sleeve 6 and the bearing housing 1 in order to protect the bearing static ring 2.

Further, with reference to Figure 3, the elastic member 42 is provided on the outer surface of the static-ring protective sleeve 6, wherein an inner bore 5 is processed on the elastic member 42. The inner bore 5 is provided along the axial direction of the elastic member 42, and the head of the adjusting screw 41 is embedded in the inner bore 5. A shoulder formed between the head and the threaded portion abuts against the elastic member 42. In the present embodiment, the inner bore structure on the elastic member 42 prevents the bearing static ring 2 and the static-ring protective sleeve 6 from being axially separated from the bearing housing 1, thereby achieving axial stableness.

Further, with reference to Figure 3, in order to make the overall structure more compact, a groove 7 is processed on the outer surface of the static-ring protective sleeve 6, and the elastic member 42 is provided in the groove 7.

With reference to Figure 2, in order to ensure the stability of the bearing structure, there are at least two elastic support mechanisms 4, which are symmetrically provided along the circumferential direction of the bearing.

In the present embodiment, it should be noted that the static-ring protective sleeve 6 is connected to the bearing static ring 2 by means of a shrink fit or other fixing means to form an integrity.

In the present embodiment, it should be noted that the elastic member 42 may be a structural member that is elastic such as a disc spring or a spring washer.

In the present embodiment, it should be noted that the static-ring protective sleeve 6 is in a clearance fit with the bearing housing 1, and that there is a small clearance fit between the static-ring protective sleeve 6 and the bearing housing 1.

In the present invention, when the pump or motor equipment operates in deviation from the rated working conditions, due to the change in hydraulic or electromagnetic force, it will cause the bearing dynamic ring 3 to be tilted with the deflection and oscillation of the main shaft 8. That means that a non-concentric deflection between the bearing dynamic ring 3 and the bearing static ring 2 occurs. At this time, due to the non-rigid connection between the static-ring protective sleeve 6, the bearing static ring 2 and the bearing housing 1, the static-ring protective sleeve 6 and the bearing static ring 2 are slightly tilted along the radial direction of the bearing with respect to a bore of the bearing housing 1, which compensates for the tilting between the bearing dynamic ring 3 and the bearing static ring 2, to avoid a drastic change in the local load between the bearing dynamic ring 3 and the bearing static ring 2, thereby improving the life-span of the bearing.

In the description of the present invention, it should be noted that the orientation or positional relationship represented by the terms "center", "lengthwise", "transversal", "front", "back", "left", "right", "vertical", "horizontal", "top", "bottom", "inner", "outer", and the like are based on the orientation or positional relationship shown in the accompanying drawings, and are only for the purpose of facilitating the description of the present invention and simplifying the description, but are not intended to indicate or imply that the referring device or element must have a particular orientation, be constructed and operated with a particular orientation, and therefore they are not to be construed as limiting the scope of protection of the present application.

In the description of the present application, unless otherwise clearly specified and limited, it should also be noted that, the terms "provide", "mounting", "connection" should be understood in a broad sense. For example, such term may be a fixed connection, or a removable connection, or an integrated connection; or it may be a mechanical connection, or electric connection; or it may be a direct connection, or an indirect connection through an intermediate medium; or it may be a connection within the two elements. For one skilled in the art, the specific meaning of the above terms in the present application can be understood according to specific cases.

The foregoing is only a preferred embodiment of the present application, and is not a limitation of the present application in any form. Any simple modifications or equivalent changes to the above embodiments based on the technical solution of the present application falls within the protection scope of the present application.

## Claims

1. A cylindrical tilting journal bearing, comprising:
a bearing housing (1), a bearing static ring (2), and a bearing dynamic ring (3), wherein the bearing static ring (2) is mounted inside the bearing housing (1), the bearing dynamic ring (3) is mounted inside the bearing static ring (2), and an elastic support mechanism (4) is provided between the bearing static ring (2) and bearing housing (1); the bearing static ring (2) is capable of being tilted within the bearing housing along the radial direction of the bearing,
**characterized in that** the elastic support mechanism (4) comprises an adjusting screw (41) and an elastic member (42), wherein the elastic member (42) is provided on the bearing static ring (2); the bearing housing (1) is provided with a threaded hole, wherein a threaded portion of the adjusting screw (41) is mated with the threaded hole and a head of the adjusting screw (41) abuts against a surface of the elastic member (42).

2. The cylindrical tilting journal bearing of claim 1, **characterized in that**
the elastic member (42) is provided with an inner bore (5), and the head of the adjusting screw (41) is inserted into the inner bore(5).

3. The cylindrical tilting journal bearing of claim 1, **characterized in that**
a static-ring protective sleeve (6) is provided around the outer surface of the bearing static ring (2), and the elastic support mechanism (4) is provided between the static-ring protective sleeve (6) and the bearing housing (1).

4. The cylindrical tilting journal bearing of claim 3, **characterized in that**
a groove (7) is provided on the static-ring protective sleeve (6), and the elastic member (42) is provided in the groove (7).

5. The cylindrical tilting journal bearing of claim 1, **characterized in that**
the elastic support mechanisms (4) are symmetrically provided along the circumferential direction of the bearing.

6. The cylindrical tilting journal bearing of claim 1, **characterized in that**
the elastic member (42) is a disc spring or a spring washer.

7. The cylindrical tilting journal bearing of claim 3, **characterized in that**
the static-ring protective sleeve (6) is connected with the bearing static ring (2) by means of a shrink fit to form an integrality.

8. The cylindrical tilting journal bearing of claim 3, **characterized in that**
the static-ring protective sleeve (6) is in clearance fit with the bearing housing (1).

9. The cylindrical tilting journal bearing of claim 1, **characterized in that**
the bearing static ring (2) is an integral-ring structure.
